# EUROPEAN PATENT SPECIFICATION

(11) **EP 3 961 015 B1**
(45) Date of publication and mention of the grant of the patent: **02.12.2026**
(21) Application number: 21196640.3
(22) Date of filing: 26.04.2018
(51) Int. Cl.: F02C 7/32

(54) **TANGENTIAL DRIVE FOR GAS TURBINE ENGINE ACCESSORIES**
TANGENTIALANTRIEB FÜR GASTURBINENMOTORZUBEHÖR
ENTRAÎNEMENT TANGENTIEL POUR ACCESSOIRES DE MOTEUR DE TURBINE À GAZ

(30) Priority: 27.04.2017 US 201715498764
(43) Date of publication of application: 02.03.2022
(62) Document number(s) of the earlier application(s) in accordance with Art. 76 EPC: 18169613.9 / 3 431 738
(73) Proprietor: RTX Corporation, Farmington, CT 06032 (US)
(72) Inventor: SUCIU, Gabriel L., Glastonbury, 06033 (US); DUONG, Hung, Unionville, 06085 (US); ZIMMITTI, Jonathan F., Glastonbury, 06033 (US); SHERIDAN, William G., Southington, 06489 (US); McCUNE, Michael E., Colchester, 06415 (US); MERRY, Brian, Andover, 06232 (US)
(74) Representative: Dehns

(56) References cited:
- EP-A1- 3 032 074
- EP-A2- 2 390 486
- GB-A- 839 961
- US-A- 2 638 744
- US-A1- 2011 154 827

## Description

### BACKGROUND OF THE INVENTION

This application relates to a gas turbine engine wherein accessories are driven by both a low speed spool and a high speed spool and wherein the axes of rotation of the accessories are generally tangential to a circumferential envelope of the gas turbine engine.

Gas turbine engines are known and typically include a fan delivering air into a bypass duct as propulsion air and into a core engine. Air in the core engine is compressed and then delivered into a combustor where it is mixed with fuel and ignited. Products of this combustion pass downstream over turbine rotors driving them to rotate.

There are a number of accessories which are associated with the gas turbine engine and which are typically driven by takeoff power shafts driven to rotate by the turbine rotors. Among the accessories are electrical generators, pumps, etc.

In one style of gas turbine engine, there are at least two spools connecting the turbine to a compressor section and connecting a turbine section to a fan and/or compressor section. It has been proposed to drive accessories from power shafts driven with each of the spools.

EP 3032074 A1 discloses a gas tubine engine according to the state of the art GB 839961 A discloses improvements in or relating to engine accessory mounting arrangements, and EP 2390486 A2 discloses an accessory gearbox with an internal layshaft.

### SUMMARY OF THE INVENTION

The present invention provides a gas turbine engine as set forth in claim 1.

These and other features may be best understood from the following drawings and specification.

### BRIEF DESCRIPTION OF THE DRAWINGS

Figure 1A schematically shows a gas turbine engine.
Figure 1B shows details of an accessory drive as associated with this disclosure.
Figure 2 shows one accessory drive arrangement.
Figure 3 is a view of the Figure 2 structure.

### DETAILED DESCRIPTION

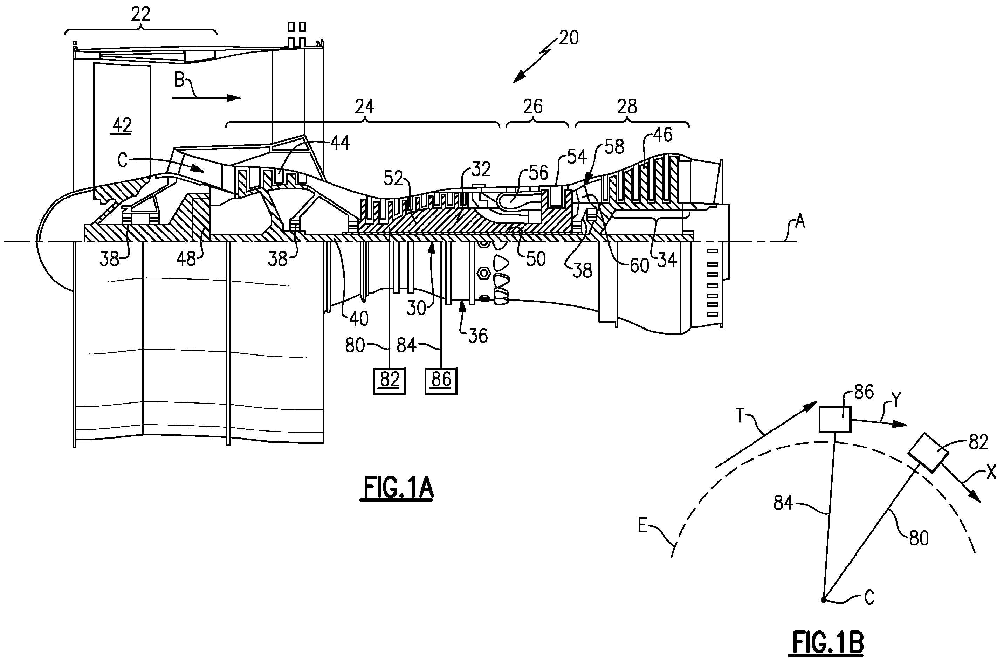

Figure 1A schematically illustrates a gas turbine engine 20. The gas turbine engine 20 is disclosed herein as a two-spool turbofan that generally incorporates a fan section 22, a compressor section 24, a combustor section 26 and a turbine section 28. Alternative engines might include an augmentor section (not shown) among other systems or features. The fan section 22 drives air along a bypass flow path B in a bypass duct defined within a nacelle 15, and also drives air along a core flow path C for compression and communication into the combustor section 26 then expansion through the turbine section 28. Although depicted as a two-spool turbofan gas turbine engine in the disclosed non-limiting embodiment, it should be understood that the concepts described herein are not limited to use with two-spool turbofans as the teachings may be applied to other types of turbine engines including three-spool architectures.

The exemplary engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided, and the location of bearing systems 38 may be varied as appropriate to the application.

The low speed spool 30 generally includes an inner shaft 40 that interconnects a fan 42, a first (or low) pressure compressor 44 and a first (or low) pressure turbine 46. The inner shaft 40 is connected to the fan 42 through a speed change mechanism, which in exemplary gas turbine engine 20 is illustrated as a geared architecture 48 to drive the fan 42 at a lower speed than the low speed spool 30. The high speed spool 32 includes an outer shaft 50 that interconnects a second (or high) pressure compressor 52 and a second (or high) pressure turbine 54. A combustor 56 is arranged in exemplary gas turbine 20 between the high pressure compressor 52 and the high pressure turbine 54. A mid-turbine frame 57 of the engine static structure 36 is arranged generally between the high pressure turbine 54 and the low pressure turbine 46. The mid-turbine frame 57 further supports bearing systems 38 in the turbine section 28. The inner shaft 40 and the outer shaft 50 are concentric and rotate via bearing systems 38 about the engine central longitudinal axis A which is collinear with their longitudinal axes.

The core airflow is compressed by the low pressure compressor 44 then the high pressure compressor 52, mixed and burned with fuel in the combustor 56, then expanded over the high pressure turbine 54 and low pressure turbine 46. The mid-turbine frame 57 includes airfoils 59 which are in the core airflow path C. The turbines 46, 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of combustor section 26 or even aft of turbine section 28, and fan section 22 may be positioned forward or aft of the location of gear system 48.

The engine 20 in one example is a high-bypass geared aircraft engine. In a further example, the engine 20 bypass ratio is greater than about six, with an example embodiment being greater than about ten, the geared architecture 48 is an epicyclic gear train, such as a planetary gear system or other gear system, with a gear reduction ratio of greater than about 2.3 and the low pressure turbine 46 has a pressure ratio that is greater than about five. In one disclosed embodiment, the engine 20 bypass ratio is greater than about ten, the fan diameter is significantly larger than that of the low pressure compressor 44, and the low pressure turbine 46 has a pressure ratio that is greater than about five. Low pressure turbine 46 pressure ratio is pressure measured prior to inlet of low pressure turbine 46 as related to the pressure at the outlet of the low pressure turbine 46 prior to an exhaust nozzle. The geared architecture 48 may be an epicycle gear train, such as a planetary gear system or other gear system, with a gear reduction ratio of greater than about 2.3:1. It should be understood, however, that the above parameters are only exemplary of one embodiment of a geared architecture engine and that the present invention is applicable to other gas turbine engines including direct drive turbofans.

A significant amount of thrust is provided by the bypass flow B due to the high bypass ratio. The fan section 22 of the engine 20 is designed for a particular flight condition -- typically cruise at about 0.8 Mach and about 35,000 feet (10,668 meters). The flight condition of 0.8 Mach and 35,000 ft (10,668 meters), with the engine at its best fuel consumption - also known as "bucket cruise Thrust Specific Fuel Consumption ('TSFC')" - is the industry standard parameter of lbm of fuel being burned divided by lbf of thrust the engine produces at that minimum point. "Low fan pressure ratio" is the pressure ratio across the fan blade alone, without a Fan Exit Guide Vane ("FEGV") system. The low fan pressure ratio as disclosed herein according to one non-limiting embodiment is less than about 1.45. "Low corrected fan tip speed" is the actual fan tip speed in ft/sec divided by an industry standard temperature correction of [(Tram °R) / (518.7 °R)]^{0.5} (where $° R = K x \frac{9}{5}$). The "Low corrected fan tip speed" as disclosed herein according to one non-limiting embodiment is less than about 1150 ft / second (350.5 meters/second).

A first power takeoff 80 is driven to rotate with the high speed spool 32 and drives an accessory drive arrangement 82. A second power takeoff shaft 84 rotates with the low speed spool 30 and drives an accessory drive arrangement 86.

As shown in Figure 1B, the accessory drive arrangements 82 and 86 generally include drive axes x and y, respectively, for their respective auxiliary drive axes. A tangent T may be taken relative to a circumferential envelope E of the gas turbine engine defined about a center axis C. The drive axes x and y are typically close to, or generally tangential at the point where the accessory drive arrangements 82 and 86 are mounted. In one embodiment, the axes x and y are within 10 degrees of a tangential T at those locations. This angle may be taken as the definition for "generally" or "close" to "tangential" for this application. For purposes of this application, the term "generally tangential" means that the axis will be within that angle relative to a tangential.

With this arrangement, the necessity for providing a lay shaft to drive the accessories, as is required when the accessory drive axes are parallel to an axis of rotation of the engine, may be eliminated. Moreover, the accessories may now be housed in a much smaller envelope.

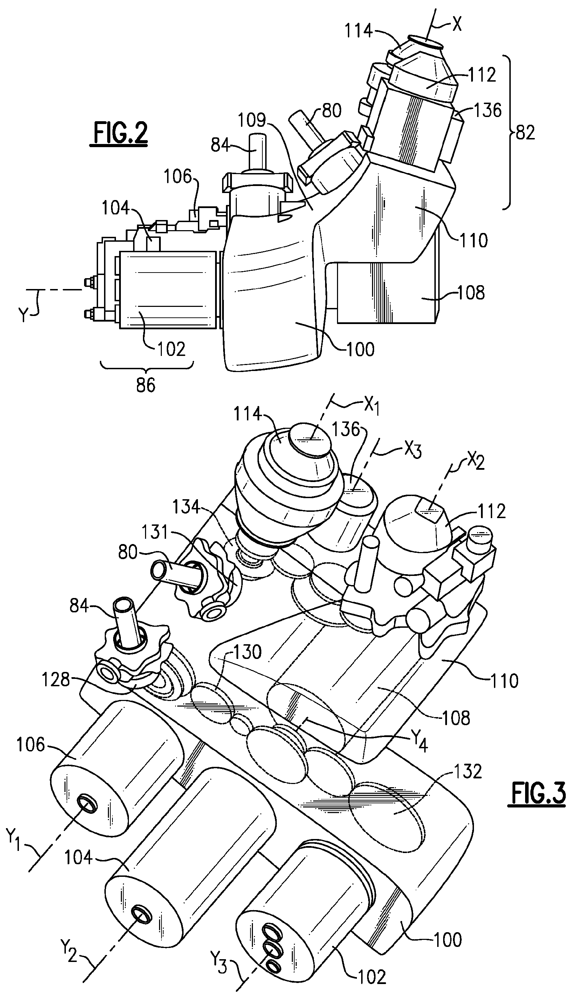

Figure 2 shows details of the accessory drive arrangements 82 and 86. Drive shaft 80 drives the accessory drive arrangement 82 while a drive shaft 84 drives the accessory drive arrangement 86. A gearbox portion 110 receives input from the shaft 84 and drives elements 102, 104, and 106. As can be appreciated from this figure, the elements 102, 104, and 106 have parallel drive axes which are spaced axially along the center axis of the engine. A combined gearbox 109 houses drive gears in portion 100 and portion 110 and is curved to fit at an inner periphery and about a center axis of the engine. The gearbox portion 110 drives accessories 112, 114 and 136 generally along axes x and spaced axially along the center axis of the engine. Another component 108 is driven to rotate by the shaft 84 and also rotates generally along an axis Y.

In one embodiment, component 102 may be a hydraulic pump, 104 a generator, 106 a main oil pump, 108 a transmission, 112 a fuel pump, 114 an air starter, and 136 a permanent magnet alternator.

Figure 3 shows further details. A bevel gear 128 drives a plurality of gears 130 to, in turn, drive shafts associated with components 102, 104, 106, and 108. As can be appreciated, drive axes Y₁, Y₂, Y₃, and Y₄ are all generally parallel to each other. In one embodiment, they are at a common radial distance from the center point C although that may vary. In addition, as can be appreciated, they are spaced along an axial dimension of the engine.

Similarly, components 112, 114, and 136 rotate about drive axes X₂, X₃, and X₁, as shown. Bevel gear 131 drives a plurality of gears 134 to transmit rotation. Again, these axes need not be at a common radial distance from the center axis C, but they are generally parallel to each other.

In an embodiment, all of the axes Y₁, Y₂, Y₃, Y₄, X₁, X₂, and X₃, are generally tangential, as defined. In further embodiments, the axes are actually tangential.

One embodiment could be summarized as a gas turbine engine having a high speed spool 32 and a low speed spool 30. A low speed power takeoff 84 is in rotatable relationship to the low speed spool and a high speed power takeoff 80 in rotatable relationship to the high speed spool. A plurality of low speed driven accessories 102/104/106/108 are intermeshed with, and configured for rotation by the low speed power takeoff about low speed spool drive axes Y and a plurality of high speed driven accessories 112/114/136 are intermeshed with, and configured for rotation by the high speed power takeoff about high speed spool drive axes X. The low speed spool drive axes Y are generally tangential to an envelope E defined about a center axis of the engine, and the high speed spool drive axes X are generally tangential to an envelope defined about the center axis.

In another embodiment, an assembly for a gas turbine engine with a first tower shaft 80 includes a gearbox housing. A plurality of first gears 134 is arranged within the gearbox housing and meshed together in a first plane (perpendicular to drive axes X₁, X₂, and X₃). A plurality of second gears 132 is arranged within the gearbox housing and meshed together in a second plane (perpendicular to drive axes Y₁, Y₂, and Y₃). The second plane is spaced from the first plane and the second plane is not parallel with the first plane. A first torque transmission device 131 is configured to couple and transmit torque between the first tower shaft and one of the first gears. A second torque transmission device 128 is configured to couple and transmit torque between the second tower shaft and one of the second gears 132.

The first plane is parallel with an axial centerline of the gas turbine engine.

Although an embodiment of this invention has been disclosed, a worker of ordinary skill in this art would recognize that certain modifications would come within the scope of this invention. For that reason, the following claim should be studied to determine the true scope and content of this invention.

## Claims

1. A gas turbine engine (20) comprising:
a first tower shaft (80);
a second tower shaft (84); and
an assembly comprising:
a gearbox housing;
a plurality of first gears (134) arranged within the gearbox housing and meshed together in a first plane;
a plurality of second gears (132) arranged within the gearbox housing and meshed together in a second plane, **characterised in that**:
the second plane is spaced from the first plane and the second plane is not parallel with the first plane;
the assembly further comprises a first torque transmission device (131) configured to couple and transmit torque between the first tower shaft (80) and one of the first gears (134);
the assembly further comprises a second torque transmission device (128) configured to couple and transmit torque between the second tower shaft (84) and one of the second gears (132); and
the first plane is parallel with an axial centerline (C) of the gas turbine engine (10).

## Patentansprüche

1. Ein Gasturbinentriebwerk (20), umfassend:
eine erste Zwischenwelle (80);
eine zweite Zwischenwelle (84); und
eine Anordnung, umfassend:
ein Getriebegehäuse;
eine Mehrzahl von ersten Zahnrädern (134), die innerhalb des Getriebegehäuses angeordnet sind und in einer ersten Ebene miteinander kämmen,
eine Mehrzahl von zweiten Zahnrädern (132), die innerhalb des Getriebegehäuses angeordnet sind und in einer zweiten Ebene miteinander kämmen, **dadurch gekennzeichnet, dass**:
die zweite Ebene von der ersten Ebene beabstandet ist und die zweite Ebene nicht parallel zur ersten Ebene ist;
die Anordnung ferner eine erste Drehmomentübertragungseinrichtung (131) umfasst, die ausgebildet ist, um die erste Zwischenwelle (80) mit einem der ersten Zahnräder (134) zu koppeln und Drehmoment zwischen diesen zu übertragen;
die Anordnung ferner eine zweite Drehmomentübertragungseinrichtung (128) umfasst, die ausgebildet ist, um die zweite Zwischenwelle (84) mit einem der zweiten Zahnräder (132) zu koppeln und Drehmoment zwischen diesen zu übertragen; und
die erste Ebene parallel zu einer axialen Mittellinie (C) des Gasturbinentriebwerks (10) ist.

## Revendications

1. Un turbomoteur à gaz (20) comprenant :
un premier arbre de transmission auxiliaire (80) ;
un deuxième arbre de transmission auxiliaire (84) ; et
un ensemble comprenant :
un carter de boîte de vitesses ;
une pluralité de premiers pignons (134) agencés à l'intérieur du carter de boîte de vitesses et engrenés ensemble dans un premier plan ;
une pluralité de deuxièmes pignons (132) agencés à l'intérieur du carter de boîte de vitesses et engrenés ensemble dans un deuxième plan, **caractérisé en ce que** :
le deuxième plan est espacé du premier plan et le deuxième plan n'est pas parallèle au premier plan ;
l'ensemble comprend en outre un premier dispositif de transmission de couple (131) configuré pour coupler et transmettre un couple entre le premier arbre de transmission auxiliaire (80) et l'un des premiers pignons (134) ;
l'ensemble comprend en outre un deuxième dispositif de transmission de couple (128) configuré pour coupler et transmettre un couple entre le deuxième arbre de transmission auxiliaire (84) et l'un des deuxièmes pignons (132) ; et
le premier plan est parallèle à un axe central (C) du turbomoteur à gaz (10).
